# EUROPEAN PATENT SPECIFICATION

(11) **EP 3 213 959 B1**
(45) Date of publication and mention of the grant of the patent: **02.10.2019**
(21) Application number: 16157973.5
(22) Date of filing: 01.03.2016
(51) Int. Cl.: B60N 2/20, B60N 2/835, B60N 2/005

(54) **HEADREST RETRACTION MEMBER, AND VEHICLE SEAT**
KOPFSTÜTZENEINZUG, SOWIE FAHRZEUGSITZ
ÉLÉMENT DE RÉTRACTION D'APPUI-TÊTE ET SIÈGE DE VÉHICULE

(43) Date of publication of application: 06.09.2017
(73) Proprietor: Adient Luxembourg Holding S.à r.l., 1855 Luxembourg (LU)
(72) Inventor: WHARTON, James, 411001 Pune, Maharashtra (IN); KURKURE, Chetan, 41033 Pune, Maharashtra (IN); DONGARE, Pravin, 422605 Sangamner, Maharashtra (IN); PANDEY, Ritesh, 41033 Pune, Maharashtra (IN); PATIL, Vijay, 411021 Phasha, Pune (IN)
(74) Representative: Liedhegener, Ralf

(56) References cited:
- EP-A2- 2 123 504
- DE-A1- 10 157 516
- DE-A1-102006 061 638
- US-A1- 2010 264 714

## Description

The invention relates to a headrest retraction member for transferring a headrest of a vehicle seat from a position for use into a non-use position, the headrest retraction member having a movably supported locking member which can be moved into and out of engagement with at least one notch of at least one headrest rod of the headrest, and a movably supported actuation component which has a wedge face, wherein, in the event of a movement of the actuation component, the wedge face acts on the locking member in such a manner that the locking member and the at least one notch move out of engagement. The invention further relates to a vehicle seat.

### Prior Art

DE 100 05 817 A1 discloses a mechanical headrest retraction member which prevents a collision of a headrest with the roof or a sunshade of a vehicle when the backrest is pivoted forwards, by the headrest, when the headrest is pivoted forwards from a position for use, being transferred into a non-use position. As a result of a memory function, the headrest, after the backrest has been pivoted backwards, is moved back into the original position for use thereof. The mechanical headrest retraction member can be actuated by means of a cable pull. The cable pull connects a folding mechanism which connects a seat member and a backrest in a pivotable manner to a tooth segment of the headrest retraction member.

DE 101 57 516 A1 discloses a headrest retraction member for transferring a headrest of a vehicle seat from a position for use into a non-use position, the headrest retraction member having a movably supported locking member, which can be moved into and out of engagement with at least one notch of at least one headrest rod of the headrest, and a movably supported actuation component which has a wedge face, wherein, in the event of a movement of the actuation component, the wedge face acts on the locking member in such a manner that the locking member and the at least one notch move out of engagement, wherein the actuation component is coupled to a cable pull.

DE 10 2006 061 638 A1 discloses an arrangement with a back rest connected with a seat. A head rest has supports connected with the back rest in a pivoting manner and cooperating with the back rest to position the head rest proximity to head of an occupant. A head rest adjusting mechanism has a releasing mechanism, a link operatively connected with the releasing mechanism and another link movable by the former link. The lateral link has a set of projections detachably connected with the supports, such that the supports can move from a locked position to an unlocked position when the releasing mechanism is operated.

### Problem

An object of the invention is to improve a headrest retraction member of the type mentioned in the introduction, in particular to provide a headrest retraction member having a reduced number of components. In addition, a corresponding vehicle seat is intended to be provided.

### Solution

This object is achieved according to the invention by a headrest retraction member according to claim 1.

As a result of the fact that the actuation component is coupled to a cable pull, the headrest retraction member may comprise only a few components.

Preferably, a first end of the cable pull is directly connected to the actuation component, that is to say, without additional components being interposed. In this instance, however, the feature "directly connected" is also intended to be understood to mean the connection of the cable pull by means of a securing component which is secured to a cable pull end, preferably a soldered cable pull fitting.

A second end of the cable pull may be able to be connected to a fitting in order to pivotably support a backrest of the vehicle seat. In an assembled state of the headrest retraction member in a vehicle seat, the second end of the cable pull may be connected to the fitting. Preferably, the second end of the cable pull is connected to a component which can be moved relative to a backrest of the vehicle seat so that, when the fitting is actuated or when the backrest is pivoted, there is necessarily a pulling action at the second end of the cable pull.

A second end of the cable pull may be able to be connected to an operating lever. The operating lever may serve to actuate the fitting. In an assembled state of the headrest retraction member in a vehicle seat, the second end of the cable pull may be connected to the operating lever so that, when the operating lever is actuated, there is necessarily a pulling action at the second end of the cable pull.

A second end of the cable pull may be able to be connected to a structural component of a seat member of the vehicle seat. In an assembled state of the headrest retraction member in a vehicle seat, the second end of the cable pull may be connected to the structural component of a seat member. The backrest can preferably be pivoted relative to the seat member so that, when the backrest is pivoted, there is necessarily a pulling action at the second end of the cable pull.

Preferably, an actuation of the cable pull results in the actuation component being moved. The cable pull may pull on the actuation component. The cable pull may displace the actuation component. The cable pull may pivot the actuation component.

A bridge for connecting to an end region of the at least one headrest rod, in particular for connecting two end regions of two headrest rods of the headrest, affords the advantage that the headrest can be moved by moving the bridge.

The actuation component is a sliding member. The sliding member is displaceably guided in a guiding profile. The sliding member can preferably be displaced in a direction which is arranged perpendicularly relative to a movement direction of the locking member. Preferably, in an upright position of the backrest, the locking member can be displaced parallel with a transverse direction and the sliding member can be displaced substantially parallel with a vertical direction. The sliding member can preferably be displaced radially relative to the backrest pivot axis.

In a preferred embodiment, the cable pull can be connected at least indirectly to the headrest in such a manner that, by means of an actuation of the cable pull, the cable pull pulls the headrest out of the position for use into the non-use position so that an actuation of the cable pull not only unlocks the headrest but subsequently also moves it into the non-use position. Preferably, the movement of the headrest is carried out only after a free travel has been carried out so that the headrest is first completely unlocked before a movement of the headrest is carried out by the cable pull.

When an actuation component which is constructed as a sliding member is displaced, a wedge face of the sliding member initially acts on the locking member in such a manner that the locking member and the at least one notch move out of engagement. Subsequently, the sliding member also carries the bridge in the direction of the non-use position of the headrest. In an alternative which does not form part of the invention, an energy accumulator, in particular a tension spring, can move the headrest from the position for use into the non-use position as soon as the locking member and the at least one notch are out of engagement.

According to another embodiment, not forming part of the invention, the actuation component may be a rocker arm. The rocker arm may be rotatably supported relative to a backrest structure of the vehicle seat. The rocker arm may be pivotably supported. A pivotable support is distinguished by a high level of operational reliability.

The rocker arm may be pretensioned by means of a spring, in particular a torsion spring, in such a manner that the rocker arm moves the headrest at least indirectly out of the position for use into the non-use position as soon as the locking member and the at least one notch are out of engagement.

The object is further achieved by a vehicle seat, in particular a motor vehicle seat, having a backrest, a seat member and a headrest, wherein the headrest can be moved by means of a headrest retraction member according to the invention from a position for use into a non-use position.

The backrest can preferably be pivotably supported about a backrest pivot axis by means of at least one fitting. A second end of the cable pull can be connected to a component of the fitting, which component can be moved relative to the backrest. The component of the fitting which can be moved relative to the backrest may be a lower fitting member which is connected to the seat member or a component of the fitting, which component is moved during an unlocking operation of the fitting, for example, a carrier. Alternatively, the second end of the cable pull may be connected to an operating lever, in particular for actuating the fitting.

Preferably, the headrest has two headrest rods which are each movably guided in a sleeve, wherein the two sleeves are securely connected to a backrest structure of the vehicle seat.

### Figures and embodiments of the invention

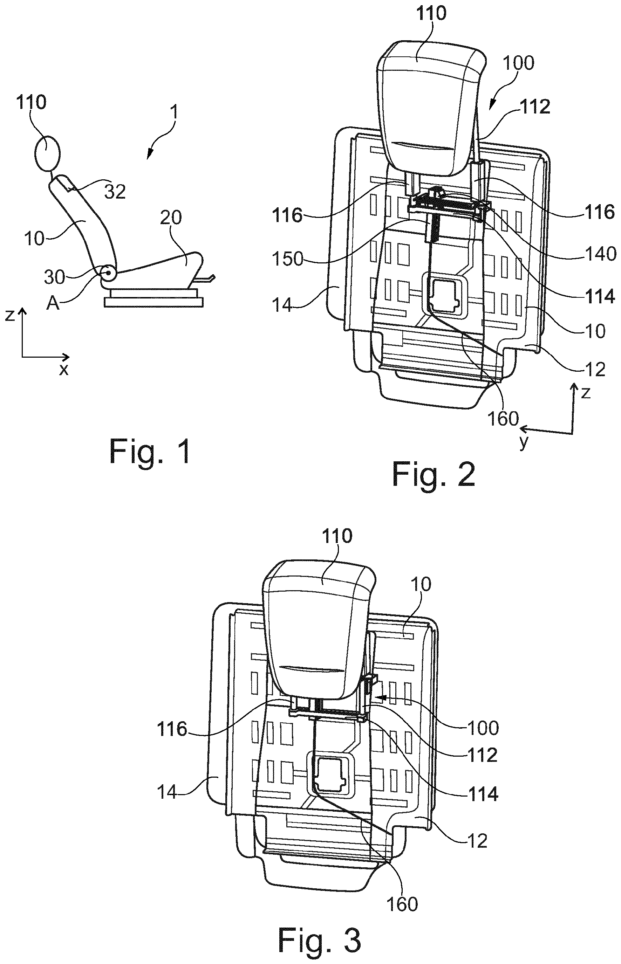

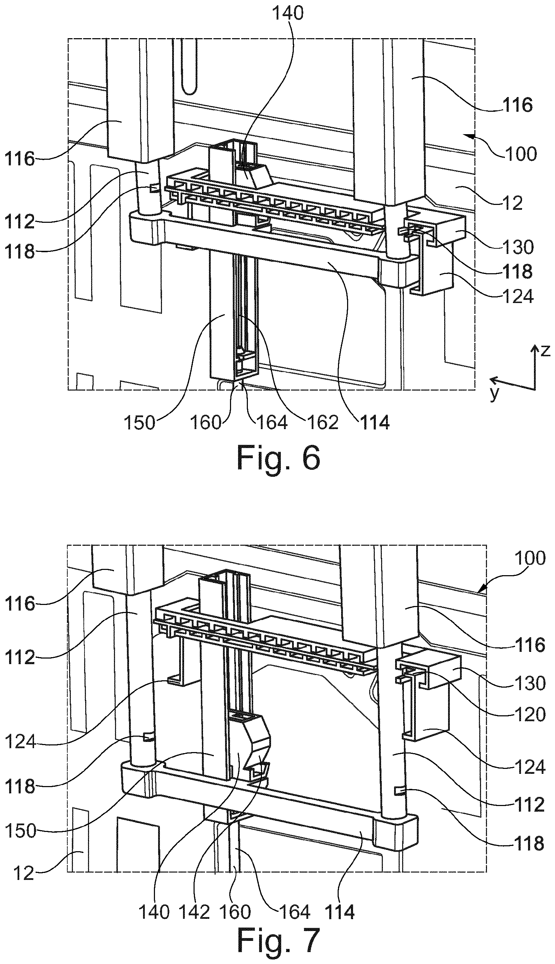

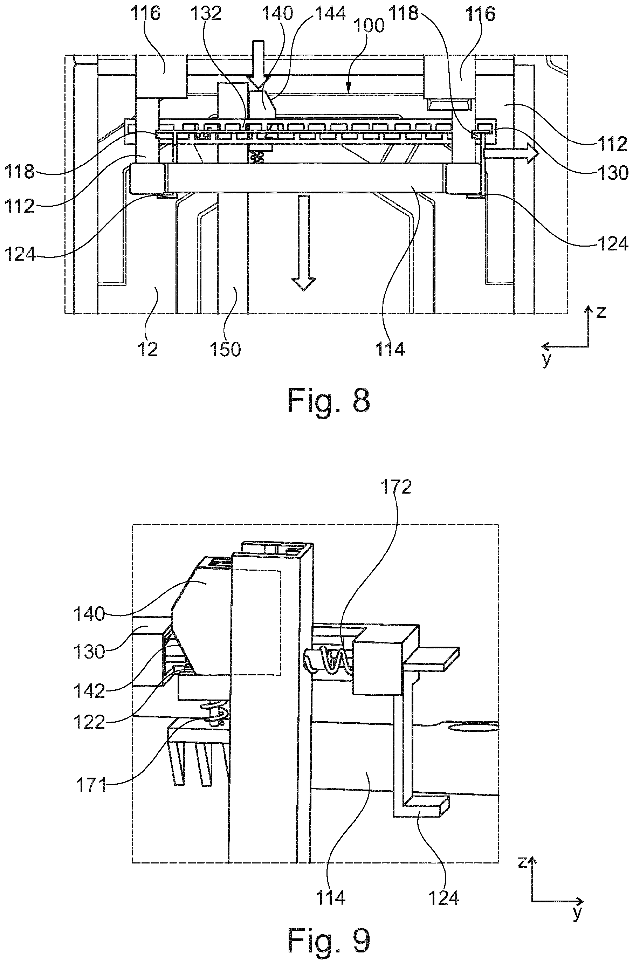

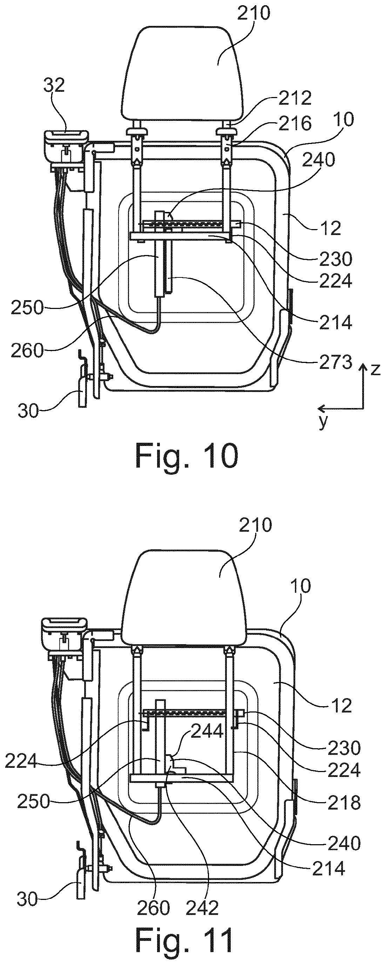

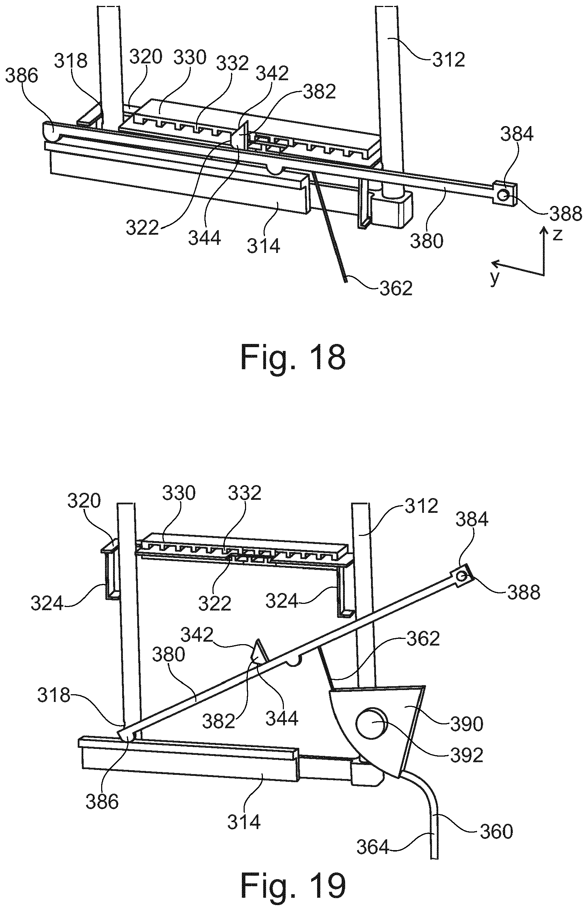

The invention is explained in greater detail below with reference to an advantageous embodiment illustrated in the Figures 1 to 9. However, the invention is not limited to this embodiment. Other embodiments, not forming part of the invention, are illustrated in the Figures 10 to 19.

In the schematic drawings:
- Fig. 1:: is a side view of a vehicle seat,
- Fig. 2:: is a perspective view of a backrest having a headrest which is arranged in a position for use and a headrest retraction member according to a first embodiment,
- Fig. 3:: shows the arrangement from Figure 2, wherein the headrest is lowered into a non-use position,
- Fig. 4:: is a perspective detailed view of the headrest retraction member of the first embodiment, wherein the headrest is located in the position for use and a locking member is in engagement with notches of two headrest rods,
- Fig. 5:: is a perspective detailed view of a contact region between a sliding member and a locking member of the headrest retraction member in accordance with the first embodiment,
- Fig. 6:: is a perspective cutout of the backrest from Figure 2, wherein the sliding member is slightly lowered, whereby the locking member and the notches are out of engagement, but the headrest is still in the position for use,
- Fig. 7:: is a perspective cutout of the backrest from Figure 2, wherein the sliding member is completely lowered and the headrest is located in the non-use position,
- Fig. 8:: is a cutout of a plan view of the backrest from Figure 2, wherein the headrest is located in the position for use, and the locking member is in engagement with the notches of the headrest rods,
- Fig. 9:: is another perspective detailed view of the contact region between the sliding member and the locking member of the headrest retraction member of the first embodiment,
- Fig. 10:: is a plan view of a backrest having a headrest which is arranged in a position for use and a headrest retraction member according to a second embodiment not according to the invention,
- Fig. 11:: shows the arrangement from Figure 10, wherein the headrest is lowered into a non-use position,
- Fig. 12:: is a perspective detailed view of the headrest retraction member of the second embodiment, wherein the headrest is located in the position for use and a locking member is in engagement with notches of two headrest rods,
- Fig. 13:: is a cutout of a plan view of the backrest of Figure 10, wherein the headrest is located in the position for use, and the locking member is in engagement with the notches of the headrest rods,
- Fig. 14:: is a plan view of a backrest with a headrest arranged in a position for use and a headrest retraction member according to a third embodiment not according to the invention,
- Fig. 15:: shows the arrangement from Figure 14, wherein the headrest is lowered into a non-use position,
- Fig. 16:: is a perspective view of the headrest retraction member according to the third embodiment, wherein the headrest is located in the position for use, and the locking member is in engagement with the notches of the headrest rods,
- Fig. 17: is a perspective detailed view of a contact region between a rocker arm and a locking member of the headrest retraction member according to the third embodiment,
- Fig. 18:: is a perspective view of the headrest retraction member of the third embodiment, wherein the headrest is located in the position for use, the rocker arm is slightly redirected and the locking member and the notches are out of engagement, and
- Fig. 19:: is a view corresponding to Figure 18, wherein the rocker arm is completely redirected and the headrest is located in the non-use position.

The vehicle seat 1 illustrated schematically in the Figures and the embodiments of headrest retraction members 100, 200, 300 are described below using three spatial directions which extend perpendicularly relative to each other. A longitudinal direction x extends in a vehicle seat 1 which is installed in the vehicle in a substantially horizontal manner and preferably parallel with a vehicle longitudinal direction, which corresponds to the conventional travel direction of the vehicle. A transverse direction y which extends perpendicularly to the longitudinal direction x is also orientated horizontally in the vehicle and extends parallel with a vehicle transverse direction. A vertical direction z extends perpendicularly to the longitudinal direction x and perpendicularly to the transverse direction y. With a vehicle seat 1 which is installed in the vehicle, the vertical direction z extends parallel with the vertical axis of the vehicle.

The positional and directional indications used, such as, for example, front, rear, upper and lower refer to a viewing direction of an occupant sitting in the vehicle seat 1 in a normal seating position, wherein the vehicle seat 1 is installed in the vehicle, is in a position for use which is suitable for transporting passengers with an upright backrest and is orientated in conventional manner in the travel direction. However, the vehicle seat 1 can also be installed in a different orientation, for example, transversely relative to the travel direction.

The vehicle seat 1 has a backrest 10, a seat member 20 and a headrest 110, 210, 310 which is arranged on the backrest 10. The backrest 10 has a supporting backrest structure 12 and an upholstery 14. The backrest 10 can be pivoted relative to the seat member 20 about a backrest pivot axis A which extends in the transverse direction y and which is defined by a fitting 30 and a rotary bearing. The fitting 30 can be unlocked by means of an operating lever 32 which is operationally connected to the fitting 30 so that the backrest 10 can be pivoted forwards out of the position for use about a backrest pivot axis A into the non-use position. During the transition of the backrest 10 from the position for use into the non-use position, the headrest 110, 210, 310 is retracted by means of a headrest retraction member 100, 200, 300 from a position for use into a non-use position.

The fitting 30 comprises a first fitting member and a second fitting member which can be rotated relative to the fitting 30 about the backrest pivot axis A when the fitting 30 is unlocked. The first fitting member is securely connected to the structure of the seat member 20, that is to say, so as to be fixed to the seat member. The second seat member is securely connected to the backrest structure 12 of the backrest 10, that is to say, so as to be fixed to the backrest. The fitting 30 may be constructed as a catch fitting, as known, for example, from DE 10 2009 041 492 A1.

Figures 2 to 9 show as a first embodiment according to the invention a headrest retraction member 100. In Figures 2 and 3, the arrangement of a headrest 110 and the headrest retraction member 100 on the backrest 10 of the vehicle seat 1 can be seen. The headrest 110 has two headrest rods 112 which in the position for use of the backrest 10 extend substantially parallel with the vertical direction z, in particular radially with respect to the backrest pivot axis A. The two headrest rods 112 have in this instance a round cross-section. The two headrest rods 112 carry an upholstered headrest body 111 for supporting a head of an occupant of the vehicle seat 1. The ends of the headrest rods 112 facing away from the headrest body 111 are connected to each other by means of a bridge 114. The bridge 114 has an elongate form and is orientated parallel with the transverse direction y. Each of two end regions of the bridge 114 is securely connected to an end of a headrest rod 112.

Two sleeves 116 are securely connected to the backrest structure 12 and serve to support the two headrest rods 112. Each of the two headrest rods 112 is displaceably guided in one of the two sleeves 116. During an adjustment of the height of the headrest 110, in particular during a movement of the headrest 110 from the position for use into the non-use position, there is produced a relative displacement of the headrest body 111, the headrest rods 112 and the bridge 114 relative to the backrest structure 12 and the sleeves 116 which are secured to the backrest structure 12.

The two headrest rods 112 each have a notch 118. The notches 118 cooperate with a locking member 120 of the headrest retraction member 100. The locking member 120 is movably supported parallel with the transverse direction y relative to the backrest structure 12. The locking member 120 can be moved into and out of engagement with the notches 118 of the headrest rod 112 in a manner described below in greater detail.

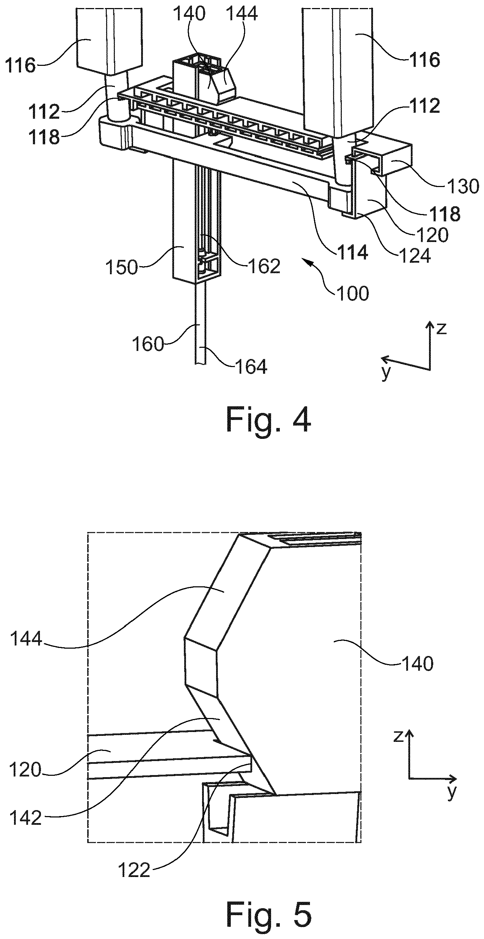

The structure and the operating method of the headrest retraction member 100 can be seen in Figures 4 to 9. The headrest retraction member 100 has the locking member 120, a guiding portion 130, a sliding member 140 as an actuation component, a guiding profile 150 and a Bowden cable 160.

The guiding portion 130 can be connected to the backrest structure 12 and, in the mounted state of the vehicle seat 1, is securely connected to the backrest structure 12, for example, screwed. The guiding portion 130 has an elongate extent parallel with the transverse direction y. The guiding portion 130 supports the locking member 120 movably parallel with the transverse direction y and relative to the backrest structure 12. The guiding portion 130 has a substantially C-shaped cross-section with two members extending parallel. The members have, at the sides thereof facing each other, a plurality of ribs 132 which are arranged beside each other in the transverse direction y and which are orientated parallel with the vertical direction z. A rib 132 of a first member and a rib 132 of the second member of the guiding portion 130 are opposite each other, are arranged with a small spacing with respect to each other and between them receive the locking member 120 in such a manner that the locking member 120 is movably supported parallel with the transverse direction y in the guiding portion 130.

The locking member 120 has an elongate and substantially planar base member, from which in the end regions an L-shaped hook 124 protrudes downwards in each case. An end of the locking member 120 can be moved by means of a displacement of the locking member 120 into and out of engagement with the notch 118 of one of the headrest rods 112. The other of the two headrest rods 112 extends through an opening in the base member of the locking member 120 in such a manner that an edge of the opening can be brought into and out of engagement with the notch 118 of this headrest rod 112. The locking member 120 is pretensioned by means of a second compression spring 172 in the direction of the notches 118. The locking member 120 can fall into the notches 118, and thereby lock the relative position of the headrest rods 112 relative to the backrest structure 12, only if the headrest 110 is located on the position for use. In a locking position of the locking member 120, the two hooks 124 engage below the bridge 114 and thereby additionally secure the position of the headrest 110. The locking member 120 has an additional opening whose edge has a contact region 122 and in which the sliding member 140 can engage.

The sliding member 140 is displaceably guided in the guiding profile 150 parallel with the headrest rods 112. The guiding profile 150 is secured to the guiding portion 130 and/or the backrest structure 12. The sliding member 140 is arranged above the bridge 114 and is supported via a first compression spring 171 on the bridge 114 in such a manner that, in a non-actuated state of the headrest retraction member 100, the sliding member 140 and the bridge 114 are slightly spaced apart from each other.

As can be seen in detail in Figure 5, the sliding member 140 has a first wedge face 142 and a second wedge face 144. In the locked position for use of the headrest 110, the first wedge face 142 is in contact with the contact region 122. The first wedge face 142 is arranged in such a manner that a movement of the sliding member 140 in a downward direction leads to a displacement of the locking member 120 in the transverse direction y so that the locking member 120 and the notches 118 move out of engagement.

The Bowden cable 160 has a cable pull 162 and a sheath 164. The Bowden cable 160 connects the sliding member 140 to a component of the fitting 30, which component can be moved relative to the backrest 10, for example, the first fitting member which is connected to the structure of the seat member 20. In a modification of the embodiment, the Bowden cable 160 connects the sliding member 140 to the operating lever 32. The sheath 164 is supported, on the one hand, on the guiding profile 150. An end of the cable pull 162 is connected to the sliding member 140. To this end, the end of the cable pull 162 is preferably provided with a fitting which is suspended in a slot of the sliding member 140. The other end is connected to the component of the fitting 30, which component can be moved relative to the backrest 10.

If the backrest 10 is pivoted out of the position for use into the non-use position, the cable pull 162 first pulls the sliding member 140 with pretensioning of the first compression spring 171 downwards until the sliding member 140 is in abutment with the bridge 114. In this instance, the locking member 120 is displaced by the first wedge face 142 so that the locking member 120 and the notches 118 move out of engagement and the headrest 110 is thereby no longer locked relative to the backrest structure 12. Subsequently, the sliding member 140 is moved further downwards by means of the cable pull 162 and is released from the locking member 120. As a result of the contact between the sliding member 140 and the bridge 114, the bridge 114 and consequently the headrest 110 is also moved until the sliding member 140 moves into an end stop, preferably on the guiding profile 150.The position of the sliding member 140 then corresponds to the non-use position of the headrest 110.

After the backrest 10 has been pivoted back into the position for use thereof, the headrest 110 can be moved manually again into the position for use thereof. The bridge 114 in this instance also carries the sliding member 140 upwards. The second wedge face 144 of the sliding member 140 in this instance moves initially into contact with the contact region 122 of the locking member 120 and displaces it slightly in the opening direction. Subsequently, the second wedge face 144 passes the contact region 122 of the locking member 120 until the contact region 122 again moves into abutment with the first wedge face 142 and the first compression spring 171 relaxes. In this instance, the second compression spring 172 presses the locking member 120 again in the direction of the notches 118 so that the locking member 120 again moves into engagement with the notches 118 as soon as the position for use of the headrest 110 is reached.

Figures 10 to 13 show as a second embodiment a headrest retraction member 200. Figures 10 and 11 show the arrangement of a headrest 210 and the headrest retraction member 200 on the backrest 10 of the vehicle seat 1. The headrest 210 has two headrest rods 212 which extend in the position for use of the backrest 10 substantially parallel with the vertical direction z, in particular radially relative to the backrest pivot axis A. The two headrest rods 212 in this instance have a round cross-section. The two headrest rods 212 carry an upholstered headrest body 211 for supporting a head of an occupant of the vehicle seat 1. The ends of the headrest rods 212 facing away from the headrest body 211 are connected to each other by means of a bridge 214. The bridge 214 has an elongate form and is orientated parallel with the transverse direction y. Each of two end regions of the bridge 214 is securely connected to an end of a headrest rod 212. The bridge 214 is pretensioned by means of an energy accumulator which is constructed in this instance as a tension spring 273 in the direction of the non-use position of the headrest 210. An end of the tension spring 273 is connected to the bridge 214. The other end of the tension spring 273 is connected to the backrest structure 12.

In Figure 10, the headrest 210 is in the position for use and the tension spring 273 is tensioned. In Figure 11, the headrest 210 is in the non-use position and the tension spring 273 is substantially relaxed and concealed in Figure 11 by the bridge 214 and therefore cannot be seen.

Two sleeves 216 are securely connected to the backrest structure 12 and serve to support the two headrest rods 212. Each of the two headrest rods 212 is displaceably guided in one of the two sleeves 216. During an adjustment of the height of the headrest 210, in particular during a transfer of the headrest 210 from the position for use into the non-use position, there is produced a relative displacement of the headrest body 211, the headrest rods 212 and the bridge 214 relative to the backrest structure 12 and the sleeves 216 which are secured to the backrest structure 12.

Both headrest rods 212 each have a notch 218. The notches 218 cooperate with a locking member 220 of the headrest retraction member 200. The locking member 220 is movably supported parallel with the transverse direction y relative to the backrest structure 12. The locking member 220 can be moved into and out of engagement with the notches 218 of the headrest rod 212 in a manner which is described in greater detail below.

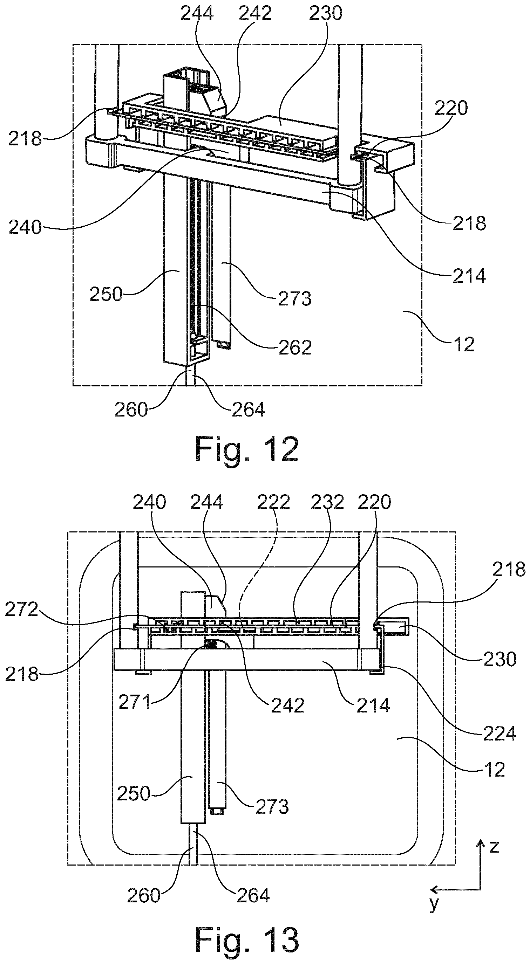

The structure and operating method of the headrest retraction member 200 correspond, unless otherwise described below, to the first embodiment and can be seen in Figures 12 and 13. The headrest retraction member 200 has the locking member 220, a guiding portion 230, a sliding member 240 as an actuation component, a guiding profile 250, a Bowden cable 260 and the tension spring 273.

The guiding portion 230 can be connected to the backrest structure 12 and in the mounted state of the vehicle seat 1 is securely connected to the backrest structure 12, for example, screwed. The guiding portion 230 has an elongate extent parallel with the transverse direction y. The guiding portion 230 supports the locking member 220 in a movable manner parallel with the transverse direction y and relative to the backrest structure 12. The guiding portion 230 has a substantially C-shaped cross-section with two parallel members. The members have at the sides thereof which face each other a plurality of ribs 232 which are arranged beside each other in the transverse direction y and which are each orientated parallel with the vertical direction z. A rib 232 of a first member and a rib 232 of the second member of the guiding portion 230 face each other, are arranged with small spacing with respect to each other and receive between them the locking member 220 in such a manner that the locking member 220 is movably supported parallel with the transverse direction y in the guiding portion 230.

The locking member 220 has an elongate and substantially planar base member from which in the end regions an L-shaped hook 224 protrudes downwards in each case. An end of the locking member 220 can be moved into and out of engagement with the notch 218 of one of the headrest rods 212 by means of a displacement of the locking member 220. The other of the two headrest rods 212 extends through an opening in the base member of the locking member 220 in such a manner that an edge of the opening can be moved into and out of engagement with the notch 218 of this headrest rod 212. The locking member 220 is pretensioned by means of a second compression spring 272 in the direction of the notches 218. The locking member 220 can fall into the notches 218, and thereby lock the relative position of the headrest rods 212 relative to the backrest structure 12, only when the headrest 210 is in the position for use. In the locking position of the locking member 220, the two hooks 224 engage below the bridge 214 and thereby additionally secure the position of the headrest 210. The locking member 220 has an additional opening whose edge has a contact region 222 and in which the sliding member 240 can engage.

The sliding member 240 is displaceably guided in the guiding profile 250 parallel with the headrest rods 212. The guiding profile 250 is secured to the guiding portion 230 and/or the backrest structure 12. The sliding member 240 is arranged above the bridge 214 and is supported via a first compression spring 271 on the bridge 214 in such a manner that, in an inactivated state of the headrest retraction member 200, the sliding member 240 and the bridge 214 are slightly spaced apart from each other.

The sliding member 240 has a first wedge face 242 and a second wedge face 244. In the locked position for use of the headrest 210, the first wedge face 242 is in contact with the contact region 222. The first wedge face 242 is arranged in such a manner that a movement of the sliding member 240 in a downward direction leads to a displacement of the locking member 220 in the transverse direction y so that the locking member 220 and the notches 218 move out of engagement.

The Bowden cable 260 has a cable pull 262 and a sheath 264. The Bowden cable 260 connects the sliding member 240 to a component of the fitting 30, which component can be moved relative to the backrest 10, for example, the first fitting member which is connected to the structure of the seat member 20. In a modification of the embodiment, the Bowden cable 260 connects the sliding member 240 to the operating lever 32. The sheath 264 is supported, on the one hand, on the guiding profile 250. An end of the cable pull 262 is connected to the sliding member 240. To this end, the end of the cable pull 262 is preferably provided with a fitting which is suspended in a slot of the sliding member 240. The other end is connected to the component of the fitting 30 movable relative to the backrest 10.

If the backrest 10 is pivoted out of the position for use into the non-use position, the cable pull 262 pulls the sliding member 240 with pretensioning of the first compression spring 271 downwards until the sliding member 240 is in abutment with the bridge 214. In this instance, the locking member 220 is displaced by the first wedge face 242 so that the locking member 220 and the notches 218 move out of engagement and the headrest 210 is thereby no longer locked relative to the backrest structure 12. Subsequently, the bridge 214 is pulled downwards by the tension spring 273. The sliding member 240 is thereby released from the locking member 220.

The bridge 214 and consequently the headrest 210 are moved downwards by the relaxing tension spring 273 until the sliding member 240 moves into an end stop, preferably on the guiding profile 250. The position of the sliding member 240 then corresponds to the non-use position of the headrest 210.

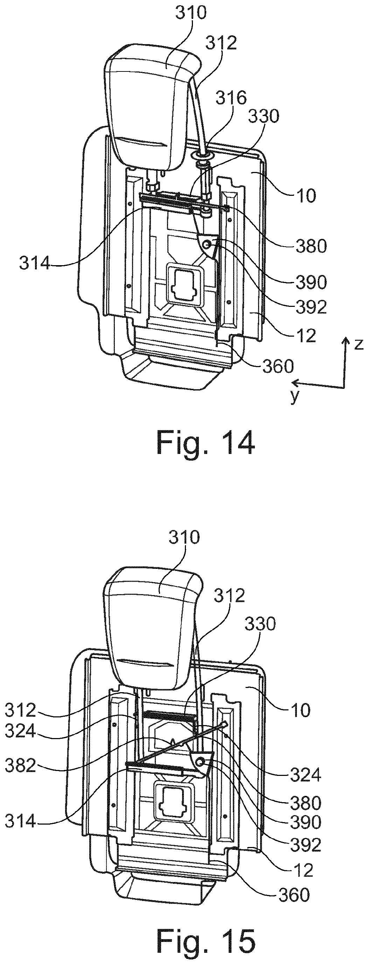

After the backrest 10 has been pivoted back into the position for use thereof, the headrest 210 can again be manually moved into the position for use thereof with tensioning of the tension spring 273. In this instance, the bridge 214 also carries the sliding member 240 upwards. In this case, the second wedge face 244 of the sliding member 240 initially moves into contact with the contact region 222 of the locking member 220 and displaces it slightly in the opening direction. The second wedge face 244 subsequently passes the contact region 222 of the locking member 220 until the contact region 222 is again in abutment with the first wedge face 242 and the first compression spring 271 relaxes. In this instance, the second compression spring 272 presses the locking member 220 again in the direction of the notches 218 so that the locking member 220 again moves into engagement with the notches 218 as soon as the position for use of the headrest 210 has been reached. Figures 14 to 19 show as a third embodiment a headrest retraction member 300. Figures 14 and 15 show the arrangement of a headrest 310 and the headrest retraction member 300 on the backrest 10 of the vehicle seat 1. The headrest 310 has two headrest rods 312, which extend in the position for use of the backrest 10 substantially parallel with the vertical direction z, in particular radially with respect to the backrest pivot axis A. The two headrest rods 312 in this instance have a round cross-section. The two headrest rods 312 carry an upholstered headrest body 311 for supporting a head of an occupant of the vehicle seat 1. The ends of the headrest rods 312 facing away from the headrest body 311 are connected to each other by means of a bridge 314. The bridge 314 has an elongate form and is orientated parallel with the transverse direction y. Each of two end regions of the bridge 314 is securely connected to an end of a headrest rod 312.

Two sleeves 316 are securely connected to the backrest structure 12 and serve to support the two headrest rods 312. Each of the two headrest rods 312 is displaceably guided in one of the two sleeves 316. During an adjustment of the height of the headrest 310, in particular during a transfer of the headrest 310 from the position for use into the non-use position, there is produced a relative displacement of the headrest body 311, the headrest rods 312 and the bridge 314 relative to the backrest structure 12 and the sleeves 316 which are secured to the backrest structure 12.

Both headrest rods 312 have a notch 318. The notches 318 cooperate with a locking member 320 of the headrest retraction member 300. The locking member 320 is movably supported parallel with the transverse direction y relative to the backrest structure 12. The locking member 320 can be moved into and out of engagement with the notches 318 of the headrest rod 312 in a manner which is described in greater detail below.

The headrest retraction member 300 has the locking member 320, a guiding member 330, a rocker arm 380 as an actuation component, a redirection segment 390 and a Bowden cable 360.

The guiding portion 330 can be connected to the backrest structure 12 and, in the assembled state of the vehicle seat 1, is securely connected to the backrest structure 12, for example, screwed. The guiding portion 330 has an elongate extent parallel with the transverse direction y. The guiding portion 330 supports the locking member 320 in a movable manner parallel with the transverse direction y and relative to the backrest structure 12. The guiding portion 330 has a substantially C-shaped cross-section having two members which extend in a parallel manner. The members have at the sides thereof facing each other a plurality of ribs 332 which are arranged beside each other in the transverse direction y and which are each orientated parallel with the vertical direction z. A rib 332 of a first member and a rib 332 of the second member of the guiding portion 330 face each other, are arranged with small spacing with respect to each other and between them receive the locking member 320 in such a manner that the locking member 320 is supported parallel with the transverse direction y so as to be able to be moved in the guiding portion 330.

The locking member 320 has an elongate and substantially planar base member from which an L-shaped hook 324 protrudes downwards in the end regions. An end of the locking member 320 can be moved into and out of engagement with the notch 318 of one of the headrest rods 312 by means of a displacement of the locking member 320. The other of the two headrest rods 312 extends through an opening in the base member of the locking member 320 in such a manner that an edge of the opening can be moved into and out of engagement with the notch 318 of this headrest rod 312. The locking member 320 is pretensioned in the direction of the notches 318 by means of a compression spring which is not illustrated in the Figures. The locking member 320 can fall into the notches 318, and thereby lock the relative position of the headrest rods 312 relative to the backrest structure 12, only when the headrest 310 is located in the position for use. In the locking position of the locking member 320, the two hooks 324 engage below the bridge 314 and thereby additionally secure the position of the headrest 310. The locking member 320 has an additional opening whose edge has a contact region 322 and in which a finger 382 of the rocker arm 380 can engage, which finger 382 has a first wedge face 342 and a second wedge face 344.

The rocker arm 380 has an elongate base member. The finger 382 is arranged slightly off-centre between two ends of the rocker arm 380. The finger 382 protrudes perpendicularly upwards from the base member of the rocker arm 380. The finger 382 is in this instance constructed integrally with the base member of the rocker arm 380. When the headrest 310 is in the position for use, the rocker arm 380 extends substantially parallel with the bridge 314 and consequently substantially parallel with the transverse direction y. The finger 382 is then substantially completely introduced in the corresponding opening in the locking member 320. The first wedge face 342 is in abutment with the contact region 322 of the locking member 320 when the headrest 310 is in the position for use.

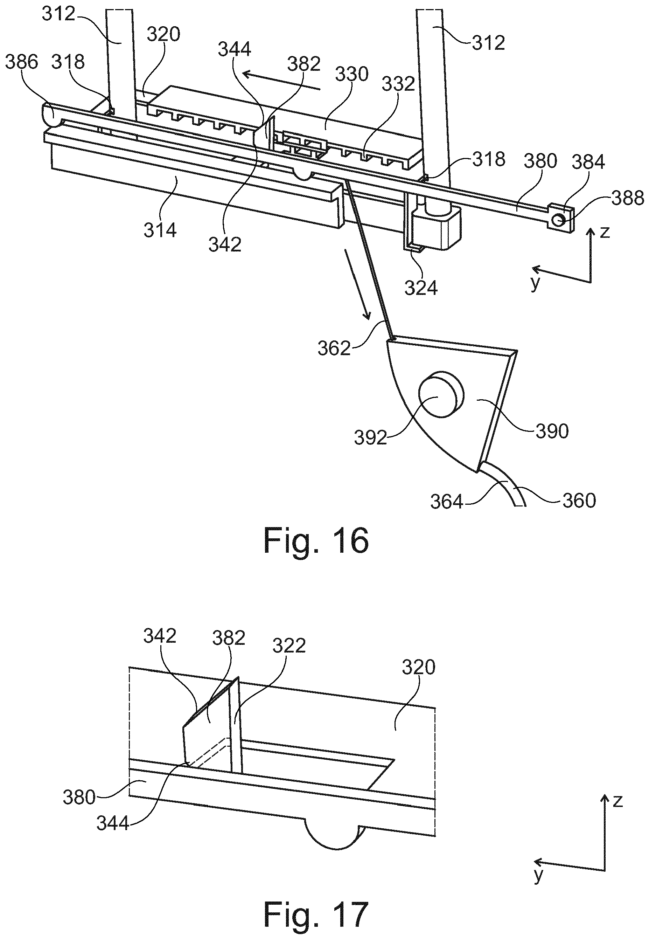

An end of the rocker arm 380 has a bearing aperture 384 for rotatable support of the rocker arm 380. The bearing aperture 384 is supported on a pin 388. The pin 388 is secured to the backrest structure 12, for example, screwed or welded. At an end of the rocker arm 380 opposite the bearing aperture 384, there is formed a cam 386 which can be positioned at the top on the bridge 314. A torsion spring which is not illustrated in the Figures pretensions the rocker arm 380 in such a manner that the cam 386 is acted on in the direction of the bridge 314. However, in the position for use of the headrest 310, as a result of the contact between the first wedge face 342 and the locking member 320, the cam 386 is still slightly spaced apart from the locking member 320, as can be seen in Figure 16. This spacing is required so that the rocker arm 380 can be rotated until the locking member 320 is pulled out of the notches 318.

The redirection segment 390 has the basic form of a circle sector. The redirection segment 390 is securely connected to the backrest structure 12 by means of a screw 392. The Bowden cable 360 has a cable pull 362 and a sheath 364. The Bowden cable 360 connects the rocker arm 380 to a component of the fitting 30, which component can be moved relative to the backrest 10, for example, the first fitting member which is connected to the structure of the seat member 20. In a modification of the embodiment, the Bowden cable 360 connects the rocker arm 380 to the operating lever 32. The sheath 364 is supported at one side on the redirection segment 390. An end of the cable pull 362 is guided via the redirection segment 390 and connected to the rocker arm 380. To this end, the end of the cable pull 362 is preferably provided with a fitting, which is suspended in a slot of the rocker arm 380. The other end is connected to the component of the fitting 30, which component can be moved relative to the backrest 10.

In the locked position for use of the headrest 310, the first wedge face 342 is in contact with the contact region 322. The first wedge face 342 is arranged in such a manner that a pivot movement of the rocker arm 380 and consequently the finger 382 in a downward direction leads to a displacement of the locking member 320 in a transverse direction y so that the locking member 320 and the notches 318 move out of engagement. Subsequently, the bridge 314 is pivoted downwards by the torsion spring 273. The finger 382 is thereby released from the locking member 320.

The bridge 314 and consequently the headrest 310 are moved downwards by the rocker arm 380 which is accordingly pretensioned by the torsion spring until the non-use position of the headrest 310 is reached.

After the backrest 10 has been pivoted back into the position for use thereof, the headrest 310 can again be manually moved into the position for use thereof. The bridge 314 in this instance also carries the rocker arm 380 upwards with the torsion spring being tensioned. In this instance, the second wedge face 344 of the finger 382 initially moves into contact with the contact region 322 of the locking member 320 and displaces it slightly in an opening direction. The second wedge face 344 subsequently passes the contact region 322 of the locking member 320 until the contact region 322 is again in abutment with the first wedge face 342 and the compression spring which is not illustrated in the Figures relaxes. In this instance, the compression spring presses the locking member 320 again in the direction of the notches 318 so that the locking member 320 again moves into engagement with the notches 318 as soon as the position for use of the headrest 310 is reached.

Although the invention has been described in detail in the drawings and the above description, the illustrations are intended to be understood to be illustrative and exemplary and non-limiting. In particular, the selection of the proportions of the individual elements which are graphically illustrated is not intended to be interpreted to be necessary or limiting. Furthermore, the invention is in particular not limited to the embodiments explained. Further variants of the invention and their construction will result for the person skilled in the art from the above disclosure, the Figures and the claims.

Terms used in the claims such as "comprise", "have", "contain", "include" and the like do not exclude other elements or steps. The use of the indefinite article does not exclude a plurality. An individual device may carry out the functions of a plurality of units or devices mentioned in the claims.

### List of reference numerals

- 1: Vehicle seat
- 10: Backrest
- 12: Backrest structure
- 14: Upholstery
- 20: Seat member
- 30: Fitting
- 32: Operating lever
- 100, 200, 300: Headrest retraction member
- 110, 210, 310: Headrest
- 111, 211, 311: Headrest body
- 112, 212, 312: Headrest rod
- 114, 214, 314: Bridge
- 116, 216, 316: Sleeve
- 118, 218, 318: Notch
- 120, 220, 320: Locking member
- 122, 222, 322: Contact region
- 124, 224, 324: Hook
- 130, 230, 330: Guiding member
- 132, 232, 332: Rib
- 140, 240: Sliding member, actuation component
- 142, 242, 342: First wedge face
- 144, 244, 344: Second wedge face
- 150, 250: Guiding profile
- 160, 260, 360: Bowden cable
- 162, 262, 362: Cable pull
- 164, 264, 364: Sheath
- 171, 271: Energy accumulator, first compression spring
- 172, 272: Energy accumulator, second compression spring
- 273: Energy accumulator, tension spring
- 380: Rocker arm, actuation component
- 382: Finger
- 384: Bearing aperture
- 386: Cam
- 388: Pin
- 390: Redirection segment
- 392: Screw
- A: Backrest pivot axis
- x: Longitudinal direction
- y: Transverse direction
- z: Vertical direction

## Claims

1. Headrest retraction member (100) for transferring a headrest (110) of a vehicle seat (1) from a position for use into a non-use position, the headrest retraction member (100) having a movably supported locking member (120), which can be moved into and out of engagement with at least one notch (118) of at least one headrest rod (112) of the headrest (110), and a movably supported actuation component (140) which has a wedge face (142), wherein, in the event of a movement of the actuation component (140), the wedge face (142) acts on the locking member (120) in such a manner that the locking member (120) and the at least one notch (118) move out of engagement, wherein the actuation component (140) is coupled to a cable pull (162) and the actuation component is a sliding member (140, 240) which is displaceably guided in a guiding profile (150, 250),
**characterised in that**
the headrest retraction member (100) has a bridge (114) for connecting to an end region of the at least one headrest rod (112), and
when the sliding member (140) is displaced, a wedge face (142) of the sliding member (140) initially brings the locking member (120) and the at least one notch (118) out of engagement and subsequently the sliding member (140) also carries the bridge (114) in the direction of the non-use position of the headrest (110).

2. Headrest retraction member (100) according to claim 1, **characterised in that** a first end of the cable pull (162) is directly connected to the actuation component (140).

3. Headrest retraction member (100) according to either of the preceding claims, **characterised in that** a second end of the cable pull (162) can be connected to a fitting (30) in order to pivot a backrest (10) of the vehicle seat (1) or to an operating lever (32), in particular in order to actuate a fitting (30).

4. Headrest retraction member (100) according to any one of the preceding claims, **characterised in that** an actuation of the cable pull (162) moves the actuation component (140).

5. Headrest retraction member (100) according to any one of the preceding claims having the bridge (114) for connecting the end regions of two headrest rods (112) of the headrest (110).

6. Headrest retraction member (100) according to any one of the preceding claims, **characterised in that** the cable pull (162) can be connected at least indirectly to the headrest (110) in such a manner that, by means of an actuation of the cable pull (162), in particular after carrying out a free travel, the cable pull (162) pulls the headrest (110) out of the position for use into the non-use position.

7. Vehicle seat (1), in particular motor vehicle seat, having a backrest (10), a seat member (20) and a headrest (110), **characterised in that** the headrest (110) can be transferred by means of a headrest retraction member (100) according to any one of the preceding claims from a position for use into a non-use position.

8. Vehicle seat (1) according to claim 7, **characterised in that** the backrest (10) is pivotably supported about a backrest pivot axis (A) by means of at least one fitting (30), and a second end of the cable pull (162) is connected to a component of the fitting (30), which component can be moved relative to the backrest (10).

9. Vehicle seat (1) according to claim 7 or 8, **characterised in that** the headrest (110) has two headrest rods (112) which are each movably guided in one of two sleeves (116), wherein the two sleeves (116) are securely connected to a backrest structure (12) of the vehicle seat (1).

## Patentansprüche

1. Kopfstützeneinzugselement (100) zum Überführen einer Kopfstütze (110) eines Fahrzeugsitzes (1) aus einer Gebrauchsposition in eine Nichtgebrauchsposition, wobei das Kopfstützeneinzugselement (100) ein beweglich abgestütztes Verriegelungselement (120) aufweist, das in mindestens eine Kerbe (118) mindestens einer Kopfstützenstange (112) der Kopfstütze (110) ein- und ausrückbar ist, und eine beweglich abgestützte Betätigungskomponente (140), die eine Keilfläche (142) aufweist,
wobei im Falle einer Bewegung der Betätigungskomponente (140) die Keilfläche (142) auf das Verriegelungselement (120) derart einwirkt, dass sich das Verriegelungselement (120) und die mindestens eine Kerbe (118) aus dem Eingriff bewegen, wobei die Betätigungskomponente (140) mit einem Seilzug (162) gekoppelt ist und die Betätigungskomponente ein Schiebeelement (140, 240) ist, das verschiebbar in einem Führungsprofil (150, 250) geführt ist,
**dadurch gekennzeichnet, dass**
das Kopfstützeneinzugselement (100) eine Brücke (114) zum Verbinden mit einem Endbereich der mindestens einen Kopfstützenstange (112) aufweist,
und
wenn das Schiebeelement (140) verschoben wird, eine Keilfläche (142) des Schiebeelements (140) zunächst das Verriegelungselement (120) und die mindestens eine Kerbe (118) aus dem Eingriff bringt und anschließend das Schiebeelement (140) auch die Brücke (114) in Richtung der Nichtgebrauchsposition der Kopfstütze (110) trägt.

2. Kopfstützeneinzugselement (100) nach Anspruch 1, **dadurch gekennzeichnet, dass** ein erstes Ende des Seilzugs (162) direkt mit der Betätigungskomponente (140) verbunden ist.

3. Kopfstützeneinzugselement (100) nach einem der vorstehenden Ansprüche, **dadurch gekennzeichnet, dass** ein zweites Ende des Seilzugs (162) mit einem Beschlag (30) zum Schwenken einer Rückenlehne (10) des Fahrzeugsitzes (1) oder mit einem Betätigungshebel (32), insbesondere zum Betätigen eines Beschlages (30), verbindbar ist.

4. Kopfstützeneinzugselement (100) nach einem der vorstehenden Ansprüche, **dadurch gekennzeichnet, dass** eine Betätigung des Seilzugs (162) die Betätigungskomponente (140) bewegt.

5. Kopfstützeneinzugselement (100) nach einem der vorstehenden Ansprüche mit der Brücke (114) zum Verbinden der Endbereiche von zwei Kopfstützenstangen (112) der Kopfstütze (110).

6. Kopfstützeneinzugselement (100) nach einem der vorstehenden Ansprüche, **dadurch gekennzeichnet, dass** der Seilzug (162) mindestens indirekt mit der Kopfstütze (110) derart verbindbar ist, dass durch eine Betätigung des Seilzugs (162), insbesondere nach Durchführung eines Freihubs, der Seilzug (162) die Kopfstütze (110) aus der Gebrauchsposition in die Nichtgebrauchsposition zieht.

7. Fahrzeugsitz (1), insbesondere Kraftfahrzeugsitz, mit einer Rückenlehne (10), einem Sitzelement (20) und einer Kopfstütze (110), **dadurch gekennzeichnet, dass** die Kopfstütze (110) mittels eines Kopfstützeneinzugselements (100) nach einem der vorstehenden Ansprüche aus einer Gebrauchsposition in eine Nichtgebrauchsposition überführbar ist.

8. Fahrzeugsitz (1) nach Anspruch 7, **dadurch gekennzeichnet, dass** die Rückenlehne (10) mittels mindestens eines Beschlages (30) um eine Rückenlehnenschwenkachse (A) schwenkbar gelagert ist und ein zweites Ende des Seilzugs (162) mit einer Komponente des Beschlages (30) verbunden ist, die relativ zur Rückenlehne (10) beweglich ist.

9. Fahrzeugsitz (1) nach Anspruch 7 oder 8, **dadurch gekennzeichnet, dass** die Kopfstütze (110) zwei Kopfstützenstangen (112) aufweist, die jeweils in einer von zwei Hülsen (116) beweglich geführt sind, wobei die beiden Hülsen (116) fest mit einer Rückenlehnenkonstruktion (12) des Fahrzeugsitzes (1) verbunden sind.

## Revendications

1. Élément de rétraction d'appuie-tête (100) pour transférer un appuie-tête (110) d'un siège de véhicule (1) d'une position pour une utilisation à une position de non-utilisation, l'élément de rétraction d'appuie-tête (100) ayant un élément de verrouillage supporté de manière mobile (120), qui peut être déplacé en prise avec au moins une encoche (118), et être désolidarisé de cette dernière, d'au moins une tige d'appuie-tête (112) de l'appuie-tête (110), et un composant d'actionnement supporté de manière mobile (140) qui comporte une face de coin (142), dans lequel, dans le cas d'un mouvement du composant d'actionnement (140), la face de coin (142) agit sur l'élément de verrouillage (120) de telle manière que l'élément de verrouillage (120) et la ou les encoches (118) sortent de la mise en prise, dans lequel le composant d'actionnement (140) est couplé à un dispositif de traction de câble (162) et le composant d'actionnement est un élément coulissant (140, 240) qui est guidé de manière à pouvoir être déplacé dans un profil de guidage (150, 250),
**caractérisé en ce que**
l'élément de rétraction d'appuie-tête (100) comporte un pont (114) pour le raccorder à une région d'extrémité de la ou des tiges d'appuie-tête (112),
et
lorsque l'élément coulissant (140) est déplacé, une face de coin (142) de l'élément coulissant (140) amène initialement l'élément de verrouillage (120) et la ou les encoches (118) à se désolidariser et, par la suite, l'élément coulissant (140) transporte également le pont (114) dans la direction de la position de non-utilisation de l'appuie-tête (110).

2. Élément de rétraction d'appuie-tête (100) selon la revendication 1, **caractérisé en ce qu'**une première extrémité du dispositif de traction de câble (162) est directement raccordée au composant d'actionnement (140).

3. Élément de rétraction d'appuie-tête (100) selon l'une ou l'autre des revendications précédentes, **caractérisé en ce qu'**une seconde extrémité du dispositif de traction de câble (162) peut être raccordée à un accessoire (30) afin de faire pivoter le dossier (10) du siège de véhicule (1) ou à un levier de fonctionnement (32), en particulier afin d'actionner un accessoire (30).

4. Élément de rétraction d'appuie-tête (100) selon l'une quelconque des revendications précédentes, **caractérisé en ce qu'**un actionnement du dispositif de traction de câble (162) déplace le composant d'actionnement (140).

5. Élément de rétraction d'appuie-tête (100) selon l'une quelconque des revendications précédentes, ayant le pont (114) pour raccorder les régions d'extrémité de deux tiges d'appuie-tête (112) de l'appuie-tête (110).

6. Élément de rétraction d'appuie-tête (100) selon l'une quelconque des revendications précédentes, **caractérisé en ce que** le dispositif de traction de câble (162) peut être raccordé au moins indirectement à l'appuie-tête (110) de telle manière qu'au moyen d'un actionnement du dispositif de traction de câble (162), en particulier après la réalisation d'un déplacement libre, le dispositif de traction de câble (162) retire l'appuie-tête (110) de la position pour une utilisation à une position de non-utilisation.

7. Siège de véhicule (1), en particulier un siège de véhicule à moteur, ayant un dossier (10), un élément de siège (20) et un appuie-tête (110), **caractérisé en ce que** l'appuie-tête (110) peut être transféré au moyen d'un élément de rétraction d'appuie-tête (100) selon l'une quelconque des revendications précédentes passant d'une position pour une utilisation à une position de non-utilisation.

8. Siège de véhicule (1) selon la revendication 7, caractérisé en que le dossier (10) est supporté de manière pivotante autour d'un axe de pivotement de dossier (A) au moyen d'au moins un accessoire (30) et une seconde extrémité du dispositif de traction de câble (162) est raccordée à un composant de l'accessoire (30), lequel composant peut être déplacé par rapport au dossier (10).

9. Siège de véhicule (1) selon la revendication 7 ou 8, caractérisé en que l'appuie-tête (110) comporte deux tiges d'appuie-tête (112) qui sont chacune guidées de manière à pouvoir se déplacer dans l'un des deux manchons (116), dans lequel les deux manchons (116) sont raccordés de manière sûre à une structure de dossier (12) du siège de véhicule (1).
